(19) Europäisches Patentamt
European Patent Office
Office européen des brevets

(11) Publication number: **0 463 238 A1**

(12) **EUROPEAN PATENT APPLICATION**

(21) Application number: **90201652.6**

(51) Int. Cl.[5]: **C08L 81/06**, C08L 77/00

(22) Date of filing: **25.06.90**

(43) Date of publication of application:
**02.01.92 Bulletin 92/01**

(84) Designated Contracting States:
**AT BE CH DE DK ES FR GB GR IT LI NL SE**

(71) Applicant: **STAMICARBON B.V.**
**Mijnweg 1**
**NL-6167 AC Geleen(NL)**

(72) Inventor: **Koning, Cornelis Eme**
**Parkstraat 18**
**NL-6436 EL Schinnen(NL)**
Inventor: **Vroomans, Hubertus Johannes**
**Spaanse Singel 18**
**NL-6191 GK Beek(NL)**

(54) **Polyamide composition and its use.**

(57) A polyamide composition comprising a blend of at least one polyamide and at least one polyethersulfone being characterized by containing as the polyamide polyamide 4.6. and as the polyethersulfone a polyarylethersulfone with only $-SO_2-$ and -O-, and, optionally, direct linkages between the aromatic rings present, which provides for a synergistic improvement of the tensile strength at break. this polyamide composition is used for the manufacture of articles for use under high tear stress and high temperature conditions as are encountered in the engine compartment of automobiles.

EP 0 463 238 A1

The present invention relates to a thermoplastic polyamide composition comprising a blend of at least one polyamide and at least one polyethersulfone and the use thereof for the manufacture of articles for use under high tear stress and high temperature conditions.

DE-A-2122735 discloses a thermoplastic polymer blend comprising 99 to 1% by weight of at least one aromatic polysulfone and 1 to 99% of at least one polyamide and having improved properties specifically with respect to their Rockwell hardness and impact resistance and showing improved melt flow viscosities.

In view of the fact that these blends do not fully satisfy as to their mechanical properties (in that they for example tend to stress cracking). EP-A-0247516 proposes improved thermoplastic compositions comprising as necessary components 2 to 97.9% by weight of a polyamide, 2 to 97.9% by weight of a polyarylethersulfone and 0.1 to 30% by weight of a polymer component comprising hydroxy groups. The third component, i.e. the polymer component having hydroxy groups, is used as a compatibilizing agent improving the compatibility between the polyamide and the polyarylethersulfone. Both prior art documents disclose as polyamides polylactames and condensation products of diamines and dicarboxylic acids and make specific reference to polyamide 6.6, polyamide 4, polyamide 6, polyamide 8, polyamide 11, polyamide 12, polyamide 6.9, polyamide 6.10, polyamide 6.12, polyamide 12.12 etc..

However, these polymer blends are not fully satisfying in case they are used for the manufacture of articles used in the engine compartment of motor cars, such as cable linings, cable binders, snap fit connectors and so on.

The object of the present invention therefore is the provision of a polyamide composition comprising a blend of at least one polyamide and at least one polyethersulfone overcoming these insufficiencies.

It has now been found that when combining a specific polyamide with a specific polyethersulfone a blend having unexpected superior properties can be obtained specifically with respect to an unexpected synergistic improvement of the tensile strength at break without that other physical properties are impaired without the necessity of making use of a compatibilizing component, the omission of which generally tends to deteriorate one or more of necessary physical properties.

The subject matter of the present invention therefore is a polyamide composition comprising a blend of at least one polyamide and at least one polyethersulfone, which is characterized in that it contains as the polyamide polyamide 4.6., and as the polyethersulfone a polyarylethersulfone in which only - $SO_2$ - and -0-, and, optionally, direct linkages between the aromatic rings are present.

According to a preferred embodiment of the invention, the polyamide composition consists of 1 to 99% by weight of polyamide 4.6 and 99 to 1% by weight of the polyarylethersulfone. More preferred, the polyamide composition comprises 20 to 80 and more preferably 70 to 30% by weight of polyarylethersulfone.

The specific polyamide used in the present invention is polyamide 4.6., a polyamide substantially comprising repeating tetramethyleneadipamide units, which preferably comprises more than 75% by weight of tetramethyleneadipamide units, more preferably 85% by weight of tetramethyleneadipamide units and which most preferably is homopolymeric polytetramethyleneadipamide. Polyamide 4.6 can be manufactured according to methods know per se, for example as disclosed in US-A-4408036, US-A-4460762 and US-A-4716214 by polycondensation of monomer tetramethylene diamine and adipic acid. In addition to these monomers further amides, imides of ester forming monomers, further diamines dicarboxylic acids, lactames and so on may be copolymerized to obtain a modified polyamide 4.6.

Preferably, the polyamide 4.6 has a molecular weight corresponding to a relative viscosity (determined on one gram of the material in 100 ml 96% $H_2SO_4$ at 25 °C) of at least 2.0, more preferably of at least 2.5. Such a molecular polyamide 4.6. is a product available on the market.

Polyether sulfones have repeating units of the generalized formula (I),

$$R - \overset{\displaystyle O}{\underset{\displaystyle O}{S}} - R^1 \qquad (I)$$

in which R and $R^1$ contain aromatic rings. They all possess ether linkages as well. A more detailed description of the polyether sulfones and their preparation is given in Encyclopedia of Polymer Science and Engineering, Vol 6, p. 106-7, John Wiley & Sons, 1988, and the references cited therein, which by reference are part of this application.

The specific polyarylethersulfones of the compositions of the present invention are limited to those polysulfones in which the linkages between the aromatic rings are limited to $-SO_2-$ and -O-, and, optionally,

a direct linkage between the aromatic rngs. Very surprisingly these polysulfones are directly compatible with the polyamide 4.6. Polyethersulfones containing for instance

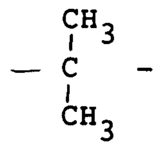

linkages between the aromatic-rings in the compositions with polyamide 4.6. show delamination in molded articles.

Preferably the polyarylethersulfone contains only $-SO_2-$ and -O- linkages most preferably the polyarylethersulfone comprises repeating units of formula II.

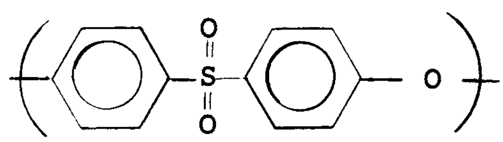

(II)

These polyarylethersulfones are commercially available in technical quantities and have a molecular weight of 15000 to 50000 more preferred of 20000 to 40000 and relative viscosities (determined at 20°C in 1% by weight solution in N-methylpyrrolidone) of 0.35 to 0.85, more preferably of 0.40 to 0.70.

In addition to the polyethersulfone and the polyamide 4.6., the polyamide composition of the present invention may additionally contain usual additives, such as fillers, reinforcing fiber materials, dyes, pigments, lubricants, stabilizers, impact modifiers, flame retardants and other polymers.

Examples of fibrous fillers which can be used in the present context are glass fibers, carbon fibers, aramide fibers and single crystal whiskers. However, the invention is not limited to these filler examples. Any substance may be used which leads to the desired properties and does not detract from the properties herewith sought.

The proportional amount of the fibrous fillers is preferably in the range of 5 to 100 parts by weight, more preferably 10 to 100 parts by weight and even more preferably 15 to 80 parts by weight, based on 100 parts by weight of the polyamide and the polyethersulfone.

Specific examples of fillers are clay, calcined clay, talc, catalpo, silica, alumina, magnesium oxide, calcium silicate, asbestos, sodium aluminate, calcium aluminate, sodium aluminosilicate, magnesium silicate, aluminium hydroxide, calcium hydroxide, barium sulfate, potassium aluminate, sodium aluminate, iron aluminate, sand glass spheres, carbon black, zinc oxide, antimony trioxide, boric acid, borax, zinc borate, metal powder, metallic whiskers, mica, graphite, titanium oxide, wollastonite, aramide fibers, carbon fibers, glass fibers, glass fiber powder, glass beads, calcium carbonate, zinc carbonate, hydrotalcite, and iron oxide. These fillers may have been subjected to various surface treatments. They can be used singly or in combination. The way of blending these fillers with the polyamide composition is not specifically limited and can be accomplished by any known method.

The polyamide composition of the present invention can be manufactured by mixing the polyethersulfone and the polyamide 4.6. and if desired the additional additives using conventional methods and equipment. The components used for the manufacture of these composition includes rollers, extruders and Banbury mixers, to which the components can be fed separately or simultaneously.

It has been found surprisingly that the polyethersulfone and the polyamide 4.6. can be easily mixed providing uniform blends without the use of a compatibilizing component as is necessary according to the disclosure of EP-A-0247516. Furtheron, it has been shown that while the heat distortion temperature of the mixture is above the heat distortion temperature of the polyamide 4.6, which is being improved by the addition of the polyethersulfone, the tensile strength at break is higher than the tensile strength at break of both the components used, so that here a surprising synergistic technical effect is obtained, which could not be expected. Since this improvement of the tensile strength at break is obtained without the deterioration of further physical properties, such as the E-modulus, the polyamide compositions of the present invention can be successfully used for the manufacture of articles, which are used under the conditions of high tear stress and high temperatures, such as frequently encountered by automotive parts, such as cable shields, cable binders, cable tires, snap fit components, brake piping, fuel piping, connectors, oil seals and gears and gear

wheels used in relatively high temperature, corrosive environment such as encountered in the engine compartment of automobilies.

Therefore, subject matter of the present invention also is the use of said polyamide compositions for the manufacture of articles for use under high tear stress and high temperature conditions, such as cable tires, gear wheels, snap fit fittings, bendings, tubings, pipings and so on. These articles can be manufactured by extrusion or injection molding making use of conventional methods and equipment.

The invention is in the following further explained on the basis of the following example and comparative example, without being restricted thereto.

Example I

1750 g Polyamide 4.6 (Stanyl TW 300$^R$ manufactured and sold by DSM) having a relative viscosity of approximately 3.4 is mixed in a twin-screw extruder at a temperature of 290 to 320 °C and a vacuum of -0.7 bar at 250 $min^{-1}$ with 750 g polyarylethersulfone (Victrex 3600 P manufactured and sold by ICI).

The mixture obtained is injection molded in an injection molding machine at a temperature of 315 °C, a pressure of 5 bar with cycles of 5-15 seconds and a mold temperature of 80 °C. Thereafter, the physical properties of the injection molded articles are determined and are listed in the following table.

Comparative example

Example 1 is repeated with the difference that instead of polyamide 4.6 the same amount (1750 g) of polyamide 6.6 (Ultramid A 43 manufactured and sold by BASF AG) is used. The properties of the composition obtained are listed in the table as well.

-8- (12) PE 6711

**Table**

| | Polyether-sulfone | Polyamide 4.6 | Polyamide 6.6 | Ratio | E-modulus $N/mm^2$ | Heat Distortion Temperature °C | Tensile strength at Break $N/mm^2$ |
|---|---|---|---|---|---|---|---|
| | Victrex 3600 P | | | 100 | 3013 | 201 | 87.6 |
| | | Stanyl TW300 | | 100 | 3036 | 144 | 85.0 |
| | | | Ultramid A3 | 100 | 3118 | 90 | 72.6 |
| Example | 750g Victrex 3600 P | 1750g Stanyl TW300 | | 30/70 | 3021 | 175 | 90.6 |
| Comparative Example | 750 g Victrex 3600 P | | 1750 g Ultramid A3 | 30/70 | 2980 | 104 | 68.0 |

As can be taken from the above table, the Example demonstrates that the polyamide composition according to the present invention has a tensile strength at break of 90.6, which is higher than the tensile strength at break of the components (87.6 and 85.0, respectively). In contrast thereto the Comparative Example shows that with Polyamide 6.6. this effect is not obtained (and is even lower than the expected additive value!), so that the composition of the invention comprising a specific selection of components provides for an unexpected technical effect, which makes the compositions claimed very useful for the utilities referred to above.

## Claims

1. A polyamide composition comprising a blend of at least one polyamide and at least one polyethersulfone, characterized in that it contains as the polyamide polyamide 4.6. and as the polyethersulfone a polyarylethersulfone in which only $-SO_2-$ and -O-, and optionally, direct linkages between the aromatic rings are present.

2. The polyamide composition according to claim 1, characterized in that it consists of 1 to 99% by weight of polyamide 4.6. and of 99 to 1% by weight of polyethersulfone.

**3.** The polyamide composition according to claim 1, characterized in that it consists of 20 to 80% by weight of polyamide 4.6. and of 80 to 20% by weight of polyethersulfone.

**4.** The polyamide composition according to claim 1, characterized in that it consists of 30 to 70% by weight of polyamide 4.6. and of 70 to 30% by weight of polyethersulfone.

**5.** The polyamide composition according to any one of claims 1 to 4, characterized in that the polyamide 4.6. comprises more than 75% by weight of tetramethyleneadipamide units.

**6.** The polyamide composition according to claim 5, characterized in that the polyamide 4.6. comprises more than 85% by weight of tetramethyleneadipamide units.

**7.** The polyamide composition according to claim 6, characterized in that the polyamide 4.6. is homopolymeric polytetramethyleneadipamide.

**8.** The polyamide composition according to any one of the claims 1-7 characterized in that the polyethersulfone comprises repeating units of the following general formula (II)

$- SO_2 -$ (II)

**9.** The use of the polyamide composition according to any one of claims 1 to 8 for the manufacture of articles for use under high tear stress and high temperature conditions.

**10.** A polyamide composition and its used as essentially described in the description and the example.

European Patent Office

# EUROPEAN SEARCH REPORT

Application Number

**EP 90 20 1652**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,D | FR-A-2 088 399 (IMPERIAL CHEMICAL INDUSTRIES) * page 3, line 39 - page 4, line 22; claims 1, 4 & DE-A-2122735 * | 1-4,8-10 | C 08 L 81/06<br>C 08 L 77/00 |
| D,A | EP-A-0 247 516 (BASF AG) * page 2, line 31 - page 3, line 35; claim 1 * | 1-4,8-10 | |
| A | EP-A-0 185 237 (BASF AG) * page 2, lines 1 - 9; claim 1 * | 1 | |
| E | EP-A-0 374 988 (STAMICARBON) * page 2, lines 46 - 55 * * page 3, lines 47 - 49; claims 1, 4-8 * * examples * | 1-10 | |

TECHNICAL FIELDS SEARCHED (Int. Cl.5)

C 08 L

The present search report has been drawn up for all claims

| Place of search | Date of completion of search | Examiner |
|---|---|---|
| Berlin | 13 February 91 | BOEKER R.B. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

& : member of the same patent family, corresponding document